# EUROPÄISCHE PATENTSCHRIFT

(11) **EP 0 804 328 B1**
(45) Veröffentlichungstag und Bekanntmachung des Hinweises auf die Patenterteilung: **17.10.2001**
(21) Anmeldenummer: 95924975.6
(22) Anmeldetag: 05.07.1995
(51) Int. Cl.: B29C 44/46

(54) **VERFAHREN UND VORRICHTUNG ZUR SCHAUMHERSTELLUNG MITTELS UNTER DRUCK GELÖSTEN KOHLENDIOXIDS**
PROCESS AND DEVICE FOR PREPARING FOAM USING CARBON DIOXIDE DISSOLVED UNDER PRESSURE
PROCEDE ET DISPOSITIF POUR LA PRODUCTION DE MOUSSES AU MOYEN DE DIOXYDE DE CARBONE DISSOUS SOUS PRESSION

(30) Priorität: 18.07.1994 DE 4425319; 21.12.1994 DE 4445790
(43) Veröffentlichungstag der Anmeldung: 05.11.1997
(73) Patentinhaber: BAYER AG, 51368 Leverkusen (DE); Hennecke GmbH, 51379 Leverkusen (DE)
(72) Erfinder: EBELING, Wilfried, D-51069 Köln (DE); EIBEN, Robert, D-51061 Köln (DE); ALTHAUSEN, Ferdinand, D-53819 Neunkirchen (DE); RAFFEL, Reiner, D-53721 Siegburg (DE)
(86) Internationale Anmeldenummer: EP9502604
(87) Internationale Veröffentlichungsnummer: WO9602376

(56) Entgegenhaltungen:
- EP-A- 0 378 243
- EP-A- 0 587 078
- EP-A- 0 767 728
- WO-A-92/16363
- WO-A-94/04256
- GB-A- 1 034 463
- US-A- 3 833 202
- US-A- 4 337 318
- DATABASE WPI Section Ch, Week 7849 Derwent Publications Ltd., London, GB; Class A17, AN 78-88510A & JP,A,53 124 575 ( HITACHI CHEMICAL KK) , 31.Oktober 1978

## Beschreibung

Die vorliegende Erfindung betrifft ein Verfahren und eine Vorrichtung zur Herstellung von Schäumen mittels unter Druck gelöstem Kohlendioxid als Treibmittel, wobei die zu verschäumende Masse unter Druck mit vorzugsweise flüssigem Kohlendioxid vermischt und anschließend unter Schaumbildung entspannt wird. Als verschäumbare Massen werden insbesondere flüssige Ausgangsprodukte für Kunststoffe eingesetzt, die aufgrund einer nach dem Verschäumen einsetzenden Polyadditions- oder Polykondensationsreaktion zum Schaum-Kunststoff aushärten. Speziell bezieht sich die Erfindung auf Polyurethan-Schaumstoffe.

Bei der Herstellung von Polyurethan-Schaumstoffen wird mindestens eine der Reaktivkomponenten (Polyisocyanat und Isocyanat-reaktive Wasserstoffatome aufweisende Verbindungen, insbesondere Polyole) mit einem flüssigen oder gasförmigen Treibmittel versetzt, danach mit der anderen Komponente vermischt und die erhaltene Mischung entweder diskontinuierlich in eine Form oder kontinuierlich auf ein Transportband gefördert, wo die Mischung aufschäumt und aushärtet.

Zur Erzeugung des Schaums haben eine Reihe von Verfahren breite Anwendung in der Technik gefunden. Einerseits werden bei niedriger Temperatur verdampfende Flüssigkeiten, wie niedermolekulare Chlorfluorkohlenwasserstoffe, Methylenchlorid, Pentan usw. eingesetzt, die aus der noch flüssigen Reaktivmischung verdampfen und Bläschen bilden. Ferner kann in die Reaktivmischung bzw. in eine der Komponenten Luft eingeschlagen werden (mechanische Schaumerzeugung) und schließlich wird bei Polyurethanschäumen Wasser als Treibmittel der Polyolkomponente zugesetzt, das nach Vermischung der Isocyanatkomponente durch Reaktion mit dem Isocyanat Kohlendioxid als Schäumgas freisetzt (chemische Schaumerzeugung).

Aus Gründen der Umweltvertrãglichkeit, der Arbeitshygiene und aufgrund der vergleichsweise hohen Löslichkeit von flüssigem Kohlendioxid in der Polyolkomponente wurde flüssiges Kohlendioxid bereits vielfach als Treibmittel vorgeschlagen (s. z. B. US-A-4 337 318). Jedoch hat Kohlendioxid bisher keinen Eingang in die Technik gefunden, offenbar aufgrund der Schwierigkeiten, bei der erforderlichen Entspannung der Reaktivmischung von Drücken zwischen 10 und 20 bar gleichmäßige Schäume zu erzeugen. Dabei besteht das Problem einerseits darin, dass unmittelbar nach der Entspannung das Kohlendioxid relativ plötzlich verdampft, so dass eine sehr starke Volumenvergrößerung der Reaktionsmischung um einen Faktor von beispielsweise ca. 10 erfolgt, die schwer zu beherrschen ist, und andererseits die Reaktivmischung zu Freisetzungsverzügen des Kohlendioxids neigt, die 3 bis 6 bar unterhalb des Gleichgewichtsdampfdrucks von CO₂ bei der jeweiligen Temperatur liegen könen, so dass es zu plötzlichen explosionsartigen Kohlendioxidfreisetzungen kommt mit der Folge, dass große Blasen oder Lunker in den Schaumstoff eingeschlossen sind.

Gemäß einer Firmenschrift der Cannon-Group soll das Problem der Verschäumung mittels flüssigem Kohlendioxid dadurch gelingen, dass der Reaktivmischung zusätzlich Stickstoff als Blasenkeimbildner zugesetzt wird, die Entspannung stufenweise durchgeführt wird und ferner eine besondere Ablagevorrichtung für den Schaum geschaffen wird. Einzelheiten des Verfahrens wurden bisher nicht bekannt.

Nach einem nicht vorveröffentlichten Vorschlag der Anmelder (EP-A-0 767 728) gelingt es, eine Vielzahl von mikroskopischen Blasenkeimen zu erzeugen, wenn die Reaktivmischung während der Entspannung durch ein feinmaschiges Sieb hohen Schergeschwindigkeiten in der Größenordnung von oberhalb 500/sec, vorzugsweise oberhalb 5.000/sec, insbesondere bevorzugt oberhalb 10⁵/sec ausgesetzt wird. Erfindungsgemäß wird nun vorgeschlagen, die flüssiges Kohlendioxid enthaltende Reaktivmischung durch ein Spaltgitter enger Spaltweite zu drücken und dabei zu entspannen.

Vorzugsweise soll die Schergeschwindigkeit zwischen 10⁵ und 10⁸/sec betragen.

Gegenstand der vorliegenden Erfindung ist ein Verfahren zur Herstellung von Schaumstoffen gemäß Anspruch 1, sowie eine Vorrichtung gemäß Anspruch 2.

Im Folgenden wird unter "flüssiges Kohlendioxid enthaltende Mischung" eine unter erhöhtem Druck stehende homogene Flüssigkeit verstanden, aus der nach Entspannen unter den vom Kohlendioxidgehalt abhängigen Gleichgewichtsdruck oberhalb Umgebungsdruck Kohlendioxid freigesetzt wird. Die flüssiges Kohlendioxid enthaltende Mischung kann durch Auflösen von gasförmigem oder festem Kohlendioxid in der mindestens einen Reaktivkomponente oder durch Vermischen mit flüssigem Kohlendioxid hergestellt worden sein.

Als Spaltgitter sind solche mit in Strömungsrichtung ausgedehnten Spalten einer Spaltweite von 0,05 bis 1,5 mm, vorzugsweise 0,1 bis 1 mm, insbesondere bevorzugt 0,1 bis 0,3 mm, geeignet. Die Ausdehnung der Spalte in Strömungsrichtung beträgt vorzugsweise mindestens das 50- bis 30-fache, besonders bevorzugt das 80- bis 200-fache, der Spaltweite.

Beim Durchgang durch die Reaktivmischung wird dieser ein Geschwindigkeitsprofil aufgeprägt, das die geforderte hohe Scherung zur Blasenkeimerzeugung bewirkt.

Femer hat sich für die erfindungsgemäß vorteilhafte Blasenkeim- und Schaumbildung als vorteilhaft erwiesen, wenn das Spaltgitter 70 bis 95 % der Gitter-Querschnittsebene abdeckt, d.h. die lichte Weite des Gitters lediglich 5 bis 30 %, vorzugsweise 7 bis 15 %, beträgt, so dass nach Durchtritt durch das Gitter ein hinreichend größer Zwischenraum zwischen den einzelnen Materialströmen besteht, dass eine auch explosionsartige plötzliche seitliche Ausdehnung des Materialstroms aufgrund der Ausbildung von Gasblasen ohne wesentliche plötzliche Erhöhung der Vorwärtsgeschwindigkeit erfolgen kann.

Die Viskosität der flüssiges Kohlendioxid enthaltenden Reaktivmischung kann 50 bis 2.000 mPas, vorzugsweise 70 bis 800 mPas, insbesondere bevorzugt 70 bis 120 mPas, betragen. Unter Berücksichtigung der Viskosität beträgt die Scherspannung der Mischung beim Durchgang durch das Sieb mindestens 1.000 Pa. Insbesondere bevorzugt sind Scherspannungen zwischen 10⁷ und 10¹⁰ Pa.

Der erforderliche Druck der Reaktivmischung vor dem Durchtritt durch das Gitter ist abhängig von der gelösten Menge an flüssigem Kohlendioxid. So liegt der Gleichgewichtsdruck bei einem Gehalt von 2 Gew.-% Kohlendioxid in der Reaktivmischung bei 7 bar, bei einem Gehalt von 4 Gew.-% Kohlendioxid in der Reaktivmischung bei 11 bar (Temperatur des Reaktivgemisches ist gleich Umgebungstemperatur). Erfindungsgemäß bevorzugt soll der Druck der Reaktivmischung vor dem Durchtritt durch das Gitter das 1,1-fache bis 1,8-fache, besonders bevorzugt das 1,3-fache bis 1,6-fache, des Gleichgewichtsdrucks betragen. Gleichgewichtsdruck bezeichnet dabei denjenigen Druck, bei dem eine über der Reaktivmischung herrschende Kohlendioxid-Atmosphäre im Gleichgewicht mit dem gelösten Kohlendioxid steht.

Ein oberhalb des Gleichgewichtsdrucks liegender Druck vor dem Durchgang durch das Gitter ist erforderlich, damit die Mischung beim Eintritt in das Gitter noch homogen ist, d.h., daß vor dem Durchtritt durch das Gitter noch keine Bildung von Gasblasen erfolgt. Jedoch kann erfindungsgemäß bevorzugt unmittelbar vor dem Eintritt der Mischung in das Gitter eine Drosselung des Druckes von oberhalb Gleichgewichtsdruck auf einen Druck unterhalb des Gleichgewichtsdruckes erfolgen. Die Drosselung kann durch eine Loch- oder Schlitzplatte erfolgen, die im Abstand von 0,5 bis 3 mm vor dem Gitter angeordnet ist, wobei die Weite der Durchtrittsöffnungen 3 bis 15 mm und die freie Durchtrittsfläche 1 bis 10 % der Fläche der Lochplatte betragen kann. Vorzugsweise beträgt der Druck der Mischung vor dem Eintritt in das Gitter 0,7 bis 1,0 des Gleichgewichtsdrucks.

Aufgrund der hervorragenden Wirkung der Entspannung der Reaktivmischung durch das Gitter im Hinblick auf die Blasenkeimbildung ist die Mitverwendung von Luft oder Stickstoff erfindungsgemäß nicht erforderlich.

Erfindungsgemäß gelingt es, unmittelbar nach Durchtritt der Reaktivmischung durch das Sieb einen Flüssig-Polyurethan-Schaum (Froth) mit einer Dichte von 50 bis 80 kg/m³ bei Einsatz von 2 bis 3 Gew.-% CO₂ bezogen auf die Reaktivmischung zu erzeugen. Zur Erzeugung von Schäumen mit noch geringerer Dichte wird vorzugsweise zusätzlich Wasser als Treibmittel eingesetzt, das in Reaktion mit dem Isocyanat ebenfalls Kohlendioxid als Treibgas erzeugt. Auf diese Weise gelingt es, Weichschäume mit einer Rohdichte von unter 15 kg/m³ zu erzeugen.

Die Erfindung wird nachfolgend anhand der beigefügten Figuren näher erläutert:

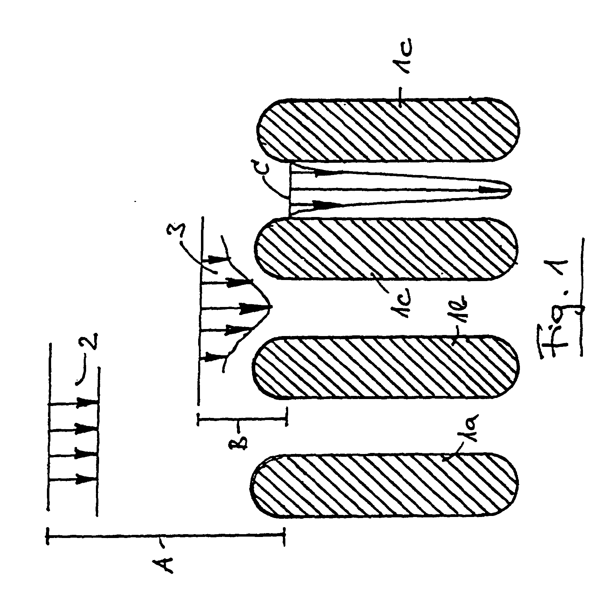

Fig. 1 erläutert das erfindungsgemäße Prinzip der Erzeugung hoher Scherung beim Durchgang durch das Gitter. Dargestellt ist der vergrößerte Querschnitt durch senkrecht zur Zeichnungsebene verlaufende Stege des Gitters la bis ld. Ferner sind die Geschwindigkeitsprofile 2, 3 und 4 der Reaktivmischung im Abstand A, B und C von der Gittereintrittsebene dargestellt.

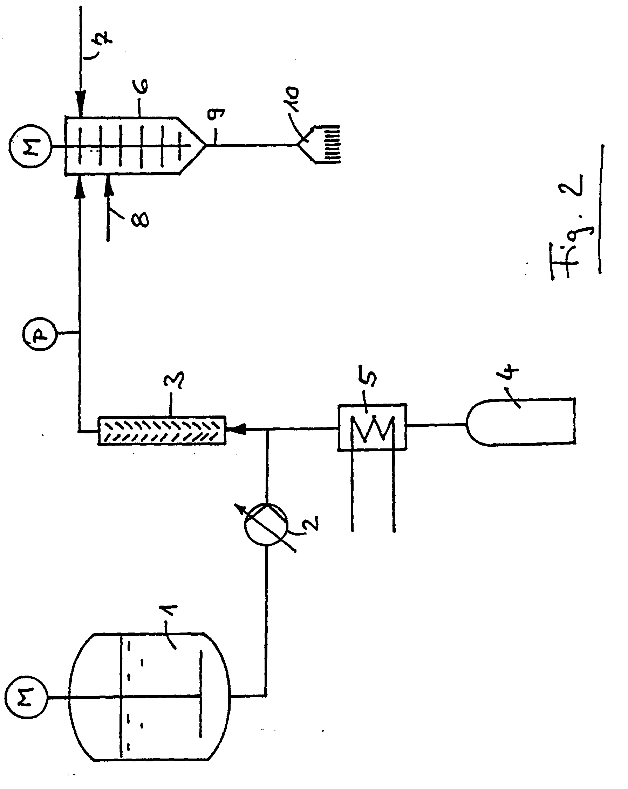

Fig. 2 zeigt schematisch in allgemeiner Form das Verfahren zur Herstellung von Polyurethanschaum. Dabei wird aus einem Vorratsbehälter 1 über die Dosierpumpe 2 Polyol in den Statikmischer 3 gepumpt. Aus dem Behälter 4 wird flüssiges Kohlendioxid über den Wärmeaustauscher 5 ebenfalls dem Statikmischer zugeführt und hier mit dem Polyol vermischt. Vorzugsweise erfolgt die Vermischung im Statikmischer 3 bei einem am Ausgang des Statikmischers gemessenen Druck P von 60 bis 150 bar. Mittels Wärmeaustauscher 5 wird sichergestellt, daß die Reaktivmischung auch nach evtl. Wärmeaufnahme aus Pumpen und Mischaggregaten usw. unterhalb der kritischen Temperatur von 31°C bleibt. Die Mischung aus Polyol und flüssigem Kohlendioxid wird dem Mischkopf 6 zugeführt, wo die Vermischung mit dem Isocyanat (Pfeil 7) und weiteren Additiven wie Schaumstabilisatoren usw. (Pfeil 8) erfolgt. Am Ausgang 9 des Mischkopfes 6 ist die erfindungsgemäße Entspannungsvorrichtung 10 angeflanscht.

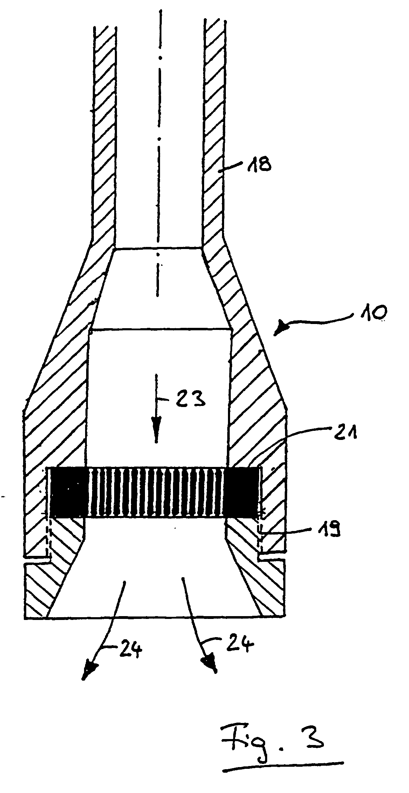

Fig. 3 zeigt eine Ausführungsform des erfindungsgemäßen Entspannungsgerätes 10. Das Entspannungsgerät besteht aus einem Rohr 18, das gegebenenfalls eine Erweiterung aufweisen kann und in dem ausgangsseitig das Gitter 21 über die Verschraubung 19 fixiert sein kann. Die flüssiges Kohlendioxid enthaltende Reaktivmischung trifft in Richtung Pfeil 23 auf das Gitter und tritt als flüssiger Schaum entlang Pfeilen 24 aus.

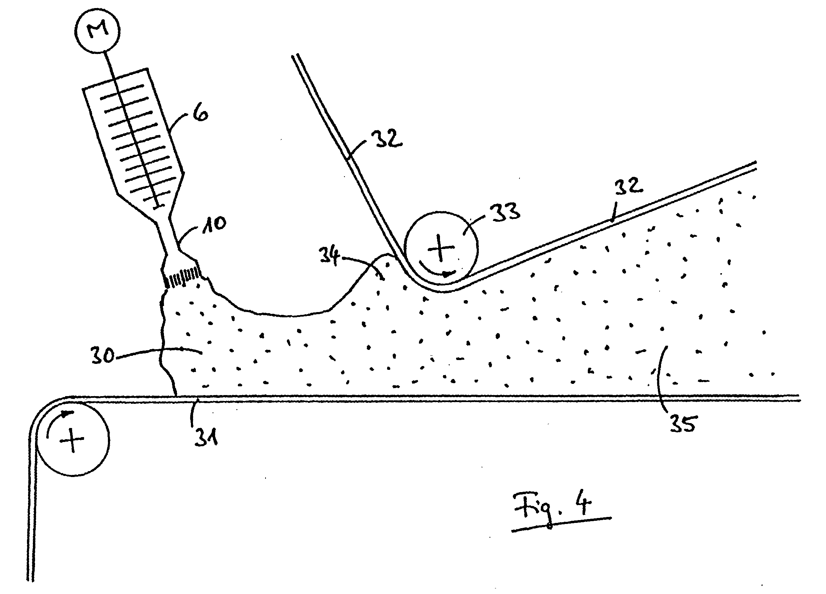

Fig. 4 zeigt eine erfindungsgemäße Anlage zur Herstellung von Blockschaum unter Einsatz des erfindungsgemäßen Schaumbildungsgerätes. Aus dem Mischkopf 6 tritt die Reaktivmischung durch das das Gitter enthaltende Schaumbildungsgerät 10 als Flüssigschaum 30 aus und wird auf die untere Kaschierfolie 31, die auf einem nicht gezeichneten Transportband läuft, abgelegt. Die obere Kaschierfolie 32 wird über eine Walze 33 geführt, die in den auf der unteren Kaschierfolie 31 abgelegten und damit geförderten Schaum eintaucht, so daß sich eine Barriere 34 bildet, die der Verteilung des Schaums über die Breite und der Verhinderung des Lufteintritts in den Zwischenraum zwischen die Kaschierfolien 31 und 32 dient. Nach Durchgang unter der Walze 33 beginnt der Schaum aufgrund der nun einsetzenden chemischen Reaktion weiter zu expandieren (35).

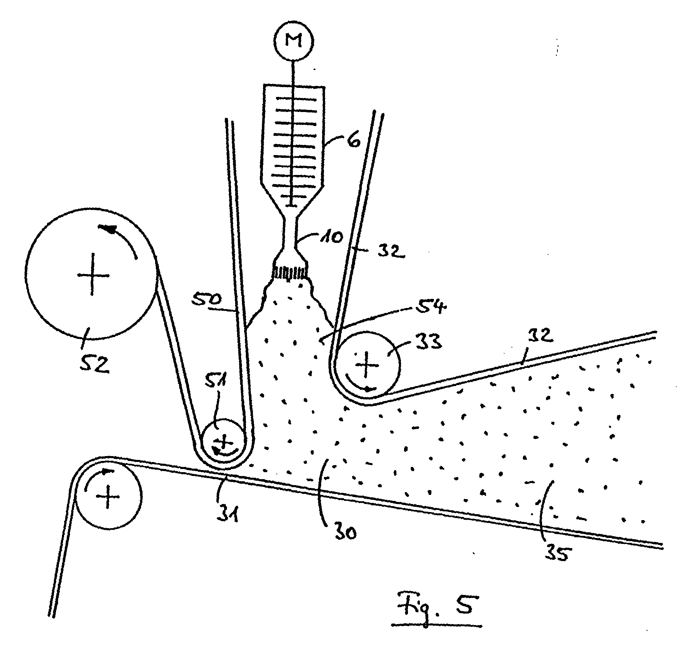

Fig. 5 zeigt eine Anlage zur Herstellung von Blockschaum gemäß Fig. 4, wobei jedoch eine Hilfskaschierfolie 50 von oben in Richtung auf die untere Kaschierfolie 31 zugeführt wird. Die Hilfskaschierfolie 50 wird mittels einer Rolle 51 gegen die untere Kaschierfolie 31 schleifend geführt und umgelenkt und wieder aufgewickelt 52. Der Flüssigschaum 30 wird in den aus im wesentlich senkrecht verlaufender oberer Kaschierfolie 32 und Hilfskaschierfolie 50 gebildeten Trog 54 gefördert.

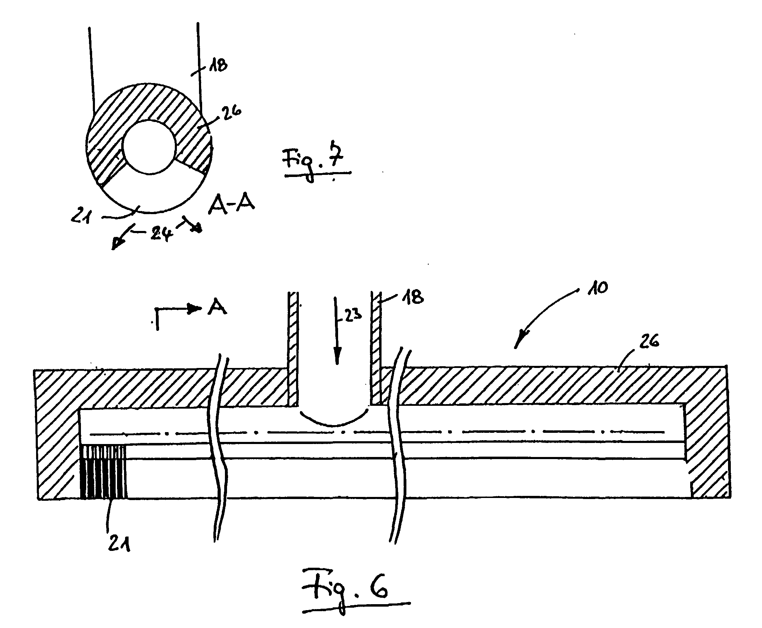

Fig. 6 zeigt eine alternative Ausführungsform des erfindungsgemäßen Entspannungssiebes 10 im Querschnitt. Bei dieser Ausführungsform ist das Entspannungsgerät in Form eines langgestreckten Rohres 26 ausgebildet, wobei das Gitter 21 durch quer zu einem achsenparallelen Umfangssektor herausgearbeiteten Gitterschlitz gebildet wird. Die flüssiges Kohlendioxid enthaltende Reaktivmischung wird entlang Pfeil 23 zugeführt. Der Schaum tritt über die gesamte Breite des Rohres 26 im wesentlichen radial aus. Ihre Länge des Rohres 26 kann an die Breite des herzustellenden Blockschaumes angepaßt sein, so daß die Verteilung des Schaums über die Breite des Transportbandes (Fig. 4) unmittelbar gegeben ist.

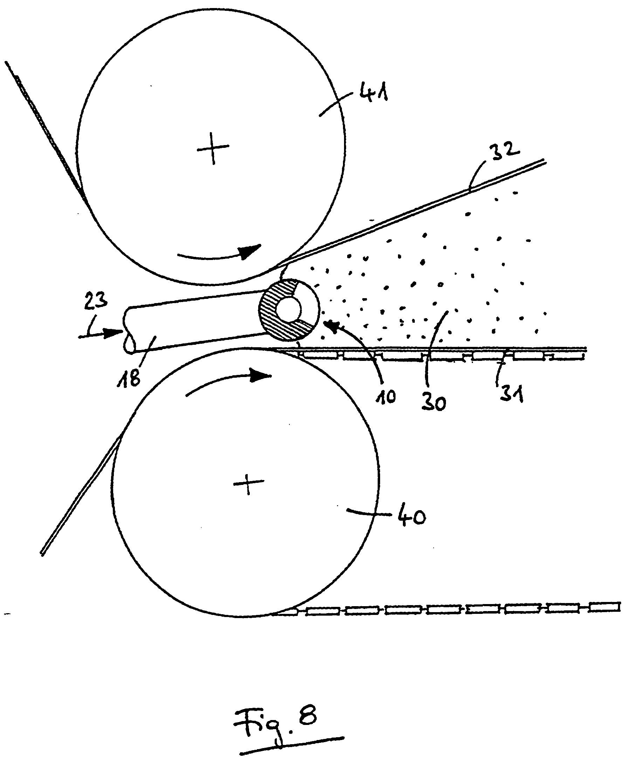

Fig. 7 zeigt die Vorrichtung gemäß Fig. 5 im Querschnitt AA.

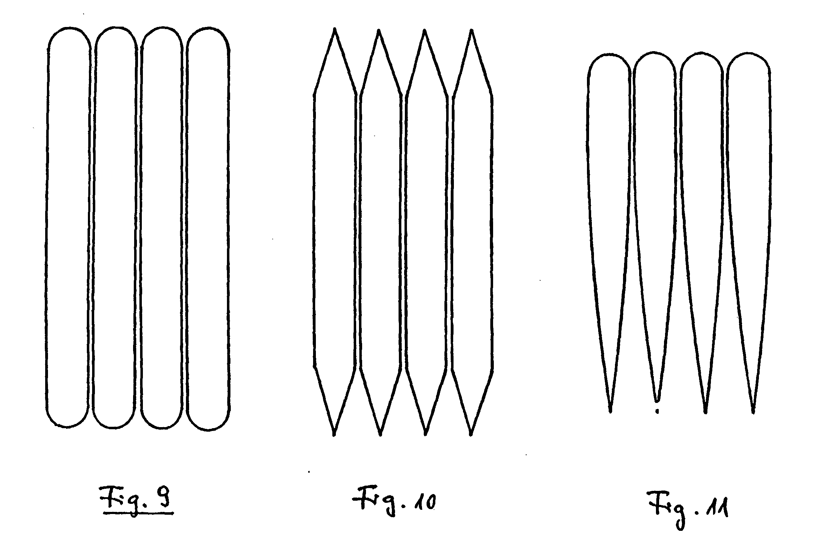

Fig. 8 zeigt den erfindungsgemäßen Einsatz der Entspanungsvorrichtungen gemäß Fig. 6 und 7 zur Herstellung von Blockschaum. Das Schaumbildungsgerät 10 ist zwischen den Umlenkwalzen 40 und 41, mittels derer die Kaschierfolien 31 und 32 geführt werden, angeordnet. Vorzugsweise werden dabei die Kaschierfolien 31 und 32 so geführt, daß diese gleitend an der Schaumaustragsvorrichtung 10 vorbeigeführt werden, so daß ein Lufteintritt zwischen die Folien 31 und 32 sicher vermieden wird. Im Interesse der Klarheit der Darstellung wurden die Folien 31 und 32 im Abstand von der Schaumaustragsvorrichtung dargestellt.

Fig. 9, 10 und 11 zeigen verschiedene Querschnittsformen von erfindungsgemäß einsetzbaren Gitterlamellen in Durchströmrichtung des Gitters.

## Patentansprüche

1. Verfahren zur Herstellung von Schaumstoffen aus Zweikomponenten-Reaktivkunststoffen unter Einsatz von Kohlendioxid als Treibmittel durch Vermischen mindestens einer der Reaktivkomponenten mit Kohlendioxid unter Druck unter Erzeugung einer flüssiges Kohlendioxid enthaltenden Mischung, Vermischen mit der anderen Reaktivkomponente, Entspannen und Aushärten des Kunststoffs, wobei die Kohlendioxid enthaltende zweite Mischung unter Aufteilung in eine Vielzahl von Einzelströmen bei Schergeschwindigkeiten von oberhalb 500/sec durch ein Spaltgitter entspannt wird.

2. Vorrichtung zum Austrag einer zu verschäumenden Zweikomponenten-Reaktivkunststoffmischung, die flüssiges Kohlendioxid enthält, in eine Form oder auf ein Transportband, enthaltend mindestens ein Spaltgitter mit enger Spaltweite.

3. Vorrichtung nach Anspruch 2, wobei das Spaltgitter Spaltweiten von 0,05 bis 1,5 mm aufweist.

4. Vorrichtung nach Anspruch 3, wobei die Ausdehnung der Spalte in Strömungsrichtung das 50- bis 300fache der Spaltweite beträgt.

5. Vorrichtung nach einem der Ansprüche 2 bis 4, wobei die lichte Weite des Gitters 5 bis 30 % der Gitterquerschnittsfläche beträgt.

## Claims

1. Process for preparing foamed materials from two-component reactive plastics materials using carbon dioxide as blowing agent by mixing at least one of the reactive components with carbon dioxide under pressure, with the generation of a mixture containing liquid carbon dioxide, mixing with the other reactive component, expansion and curing of the plastics material, wherein the second mixture containing carbon dioxide is expanded by means of a slotted grating with sub-division into a large number of individual flows at rates of shear of above 500/sec.

2. Apparatus for the discharge of a two-component reactive plastics material mixture for foaming and containing liquid carbon dioxide into a mould or onto a conveyor belt, containing at least one slotted grating with narrow slot width.

3. Apparatus according to claim 2, wherein the slotted grating exhibits slot widths of 0.05 to 1.5 mm.

4. Apparatus according to claim 3, wherein the expansion of the slots in flow direction comes to 50 to 300 times the slot width.

5. Apparatus according to one of claims 2 to 4, wherein the clear width of the grating comes to 5 to 30% of the grating cross-sectional area.

## Revendications

1. Procédé pour la préparation de mousses à partir de matières plastiques réactives à deux constituants en utilisant du dioxyde de carbone comme agent moussant par mélange d'au moins un des constituants réactifs avec du dioxyde de carbone sous pression en produisant un mélange contenant du dioxyde de carbone liquide, par mélange avec l'autre constituant réactif, par détente et par durcissement de la matière plastique, le deuxième mélange contenant du dioxyde de carbone étant détendu à travers une grille à fentes avec une distribution dans de nombreux courants individuels à des vitesses de cisaillement supérieures à 500/s.

2. Dispositif pour l'évacuation d'un mélange de matières plastiques à deux constituants à faire mousser, lequel contient du dioxyde de carbone liquide, dans un moule ou sur une bande convoyeuse, contenant au moins une grille à fentes avec une largeur de fente étroite.

3. Dispositif selon la revendication 2, la grille à fentes présentant des largeurs de fente de 0,05 à 1,5 mm.

4. Dispositif selon la revendication 3, l'élargissement de la fente étant dans la direction de l'écoulement de 50 à 300 fois la largeur de la fente.

5. Dispositif selon l'une quelconque des revendications 2 à 4, la largeur de jour de la grille étant de 5 à 30 % de la surface transversale de la grille.
